# EUROPÄISCHE PATENTANMELDUNG

(11) **EP 2 106 729 A1**
(43) Veröffentlichungstag der Anmeldung: **07.10.2009**
(21) Anmeldenummer: 09155943.5
(22) Anmeldetag: 24.03.2009
(51) Int. Cl.: A47J 36/10, A47J 27/08

(54) **Kochgefäß**

(30) Priorität: 04.04.2008 DE 102008017639
(71) Anmelder: WMF WÜRTTEMBERGISCHE METALLWARENFABRIK AG, 73309 Geislingen/Steige (DE)
(72) Erfinder: Barth, Peter, 89150, Laichingen (DE); Boerner, Cornelius, 73329, Kuchen (DE); Kiefer, Alexander, 73329, Kuchen (DE); Neumayer, Martin, 89547, Gerstetten-Dettingen (DE)
(74) Vertreter: Bongen, Renaud & Partner

(57) **Zusammenfassung**

Die vorliegende Erfindung betrifft ein Kochgefäß (1) mit einem Gefäßkörper (2) und einem Deckel (3). Erfindungswesentlich ist dabei, dass der Deckel (3) mittels einer Verriegelungseinrichtung (4) bis zu einem maximalen (Dampf-)druck von p < 0,5 bar druckdicht mit dem Gefäßkörper (2) verschließbar ist.

## Beschreibung

Die vorliegende Erfindung betrifft ein Kochgefäß mit einem Gefäßkörper und einem Deckel gemäß dem Oberbegriff des Anspruchs 1.

Die Garzeit von Nahrungsmitteln hängt insbesondere von einer Gartemperatur ab, wobei die Garzeit üblicherweise reduziert werden kann, sofern die Temperatur erhöht wird. Von diesem Prinzip machen auch sogenannte Schnellkochtöpfe Gebrauch, in welchen Nahrungsmittel unter erhöhtem Druck und damit mit Temperaturen von über 100° C gegart werden können. Durch die so stark erhöhte Temperatur lässt sich die Garzeit deutlich reduzieren. Mit üblichen, nicht druckdicht verschließbaren Kochgefäßen, ist ein derartiger Anstieg der Temperatur jedoch nicht zu erreichen, da der bei Temperaturen von ca. 100° C entstehende Wasserdampf durch zwischen einem Gefäßkörper und einem Deckel des Kochgefäß vorhandene Spalte entweichen kann. Da der Druck in obengenannten Schnellkochtöpfen auf bis zu 2,5 bar ansteigen kann, unterliegen diese der sogenannten Druckbehälterrichtlinie, in welcher Richtwerte für ortsfeste oder bewegliche Apparate und Behälter vorgegeben werden, in denen ein Gas-, Dampf- oder Flüssigkeitsüberdruck von mehr als 0,5 bar besteht oder sich entwickeln kann.

Aus der DE 20 2006 005 562 U1 ist ein gattungsgemäßes Kochgefäß bekannt, bei welchem auf einfache Weise mittels eines am Kochgefäß befestigten Thermometers die Temperatur während des Kochvorganges auch dann verfolgt werden kann, wenn dies beispielsweise durch visuell sichtbare Anzeichen nicht mehr möglich ist. Durch das am Kochgefäß befestigte Thermometer soll beispielsweise sichergestellt werden können, dass auch bei einem sanften Garvorgang eine zum Abtöten schädlicher Mikroorganismen, wie beispielsweise Salmonellen oder dergleichen, notwendige Temperatur (beispielsweise 70° C bis 80° C) erreicht und über den notwendigen Zeitraum aufrecht erhalten werden kann. Durch die fixe Anordnung des Thermometers am Kochgefäß soll darüber hinaus die wirksamste Position des Thermometers ab Werk vorgegeben werden, so dass fehlerhafte Anordnungen durch den Benutzer zuverlässig ausgeschlossen werden können.

Die vorliegende Erfindung beschäftigt sich mit dem Problem, für ein Kochgefäß der gattungsgemäßen Art eine verbesserte Ausführungsform anzugeben, welche eine Reduzierung der Garzeit von in dem Kochgefäß zubereiteten Nahrungsmitteln erlaubt und sich zudem einfach vermarkten lässt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Deckel eines herkömmlichen Kochgefäßes, mit welchem ein Gefäßkörper desselben verschlossen werden kann, mit einer Verriegelungsmechanik auszustatten, so dass der Deckel bis zu einem maximalen Dampfdruck von p < 0,5 bar druckdicht mit dem Gefäßkörper verschlossen werden kann. Die Grenze von 0,5 bar soll dabei einerseits einen erhöhten Druck und damit eine gegenüber einem herkömmlichen Kochgefäß erhöhte Gartemperatur ermöglichen, andererseits jedoch den Druck begrenzen, so dass das erfindungsgemäße Kochgefäß nicht unter die Druckbehälterrichtlinie fällt und dadurch deutlich einfacher zu vermarkten ist, da spezielle Zulassungsverfahren, wie sie bei mit einem Dampfdruck von p > 0,5 bar arbeitenden Schnellkochtöpfen, nicht zu absolvieren sind. Hierbei ist denkbar, dass das Kochgefäß ein Dichtelement aufweist, mit welchem der Deckel gegenüber dem Gefäßkörper abgedichtet werden kann. Durch die Begrenzung des maximal auftretenden Druckes auf p < 0,5 bar, gestaltet sich der gesamte Herstellungs- und Vermarktungsprozess deutlich einfacher und damit kostengünstiger, so dass das erfindungsgemäße Kochgefäß günstiger am Markt angeboten werden kann, wodurch sich wiederum Wettbewerbsvorteile realisieren lassen. Durch die im Vergleich zu einem herkömmlichen Kochgefäß aufgrund des größeren Drucks erhöhte Gartemperatur, lässt sich - wie eingangs erwähnt - die Garzeit der im Kochgefäß zubereiteten Nahrungsmittel reduzieren, wodurch insbesondere auch eine schonende Zubereitung der Nahrungsmittel erreicht werden kann, bei welcher besonders viele wertvolle Vitamine und Nährstoffe erhalten bleiben.

Bei einer vorteilhaften Weiterbildung der erfindungsgemäßen Lösung, weist das Kochgefäß ein Sicherheitsventil auf, welches ab einem Druck von p ≥ 0,5 bar öffnet. Hierdurch kann zuverlässig gewährleistet werden, dass in dem erfindungsgemäßen Kochgefäß zu keiner Zeit ein (Dampf-)druck von p ≥ 0,5 bar herrscht, wodurch das Kochgefäß zwangsläufig den Reglementierungen der Druckbehälterrichtlinie unterliegen würde. Gleichzeitig ermöglicht es ein derartiges Sicherheitsventil, dass der sich im Kochgefäß ausbildende Druck die Grenze, ab welcher die zu garenden Lebensmittel Schaden nehmen können, nicht überschreitet. Insbesondere kann dadurch zuverlässig vermieden werden, dass aufgrund einer kurzen Unachtsamkeit, der Dampfdruck im Kochgefäß stark ansteigt und dadurch die zu garenden Lebensmittel einerseits geschmacklich und bezüglich ihres Aussehens Schaden nehmen und andererseits wertvolle Nährstoffe, wie beispielsweise Vitamine, abgetötet werden. Das Sicherheitsventil gewährleistet somit eine schonende Zubereitung der Nahrungsmittel, bei welcher insbesondere die wertvollen Inhaltsstoffe erhalten bleiben.

Bei einer weiteren vorteilhaften Ausführungsform der erfindungsgemäßen Lösung, ist der Deckel des Kochgefäßes zumindest bereichsweise aus Glas ausgebildet. Denkbar ist hierbei, dass der Deckel lediglich ein transparentes Bullauge aus Glas aufweist und im Übrigen aus Metall besteht, oder aber dass der Deckel gänzlich aus Glas gefertigt ist. In beiden Fällen, das heißt sowohl bei einem Sichtfenster aus Glas als auch bei einem komplett aus Glas hergestellten Deckel, kann gewährleistet werden, dass die in dem Kochgefäß zu garenden Nahrungsmittel während des Kochvorganges visuell kontrolliert werden können. Insbesondere ist es auch möglich, den Wasserstand im Kochgefäß, welcher für die Dampferzeugung erforderlich ist, visuell zu kontrollieren und dadurch einigermaßen sicher auszuschließen, dass der Wasserstand unter einen definierten Minimalwert abfällt, ab welchem ein Anbrennen der Nahrungsmittel zu befürchten wäre.

Zweckmäßig ist das Dichtelement, welches beispielsweise als Dichtring ausgebildet sein kann, lösbar fest am Deckel des Kochgefäßes angeordnet. Eine derartige lösbar feste Anordnung ermöglicht eine besonders einfache und dadurch hygienische Reinigung des Deckels, bei welcher auch die an sich schwer zugänglichen Zwischenräume zwischen dem Deckel und dem Dichtring leicht zu reinigen sind. Gleichfalls ist es durch einen derartigen, abnehmbaren Dichtring möglich, den Deckel nach dem Abnehmen des Dichtrings in einer Spülmaschine zu reinigen. Dies wäre bei einem fest am Deckel angeordneten Dichtring üblicherweise nicht möglich, da ein derartiger Dichtring zumindest bei fortdauerndem Spülen in einer Spülmaschine aufgrund der dort herrschenden Bedingungen, Schaden nehmen würde. Darüber hinaus erleichtert ein derartiger abnehmbarer Dichtring auch die Wartung des erfindungsgemäßen Kochgefäßes, da der Dichtring üblicherweise schneller verschleißt als die Übrigen Bestandteile des Kochgefäßes und dementsprechend in gewissen Abständen ausgetauscht werden muss. Ist dabei der Dichtring abnehmbar, so kann lediglich dieser durch ein entsprechendes Ersatzteil ersetzt werden, während der Deckel im Übrigen vorzugsweise über die gesamte Lebensdauer des Kochgefäßes unverändert benutzt werden kann.

Bei einer weiteren vorteilhaften Ausbildung der erfindungsgemäßen Lösung, weist das Druckgefäß eine Restdrucksicherungseinrichtung auf, welche ein Öffnen des Deckels bei einem Druck von p > 0,04 bar zuverlässig verhindert. Eine derartige Restdrucksicherungseinrichtung gewährleistet, dass sich das Kochgefäß ausschließlich dann öffnen lässt, wenn der Druck vollkommen abgebaut ist. Die Restdrucksicherungseinrichtung kann beispielsweise durch einen Verriegelungsmechanismus realisiert werden, der ab einem Druck von p > 0,04 bar den Verriegelungsmechanismus des Kochgefäßes sperrt und erst unterhalb des genannten Drucks ein Bedienen des Verriegelungsmechanismus, das heißt ein Öffnen des Kochgefäßes erlaubt. Hierdurch soll insbesondere gewährleistet werden, dass das Kochgefäß nicht in unter Druck stehendem Zustand geöffnet werden kann, wodurch ein möglicherweise bestehendes Verletzungsrisiko für den Benutzer des erfindungsgemäßen Kochgefäßes reduziert werden soll.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

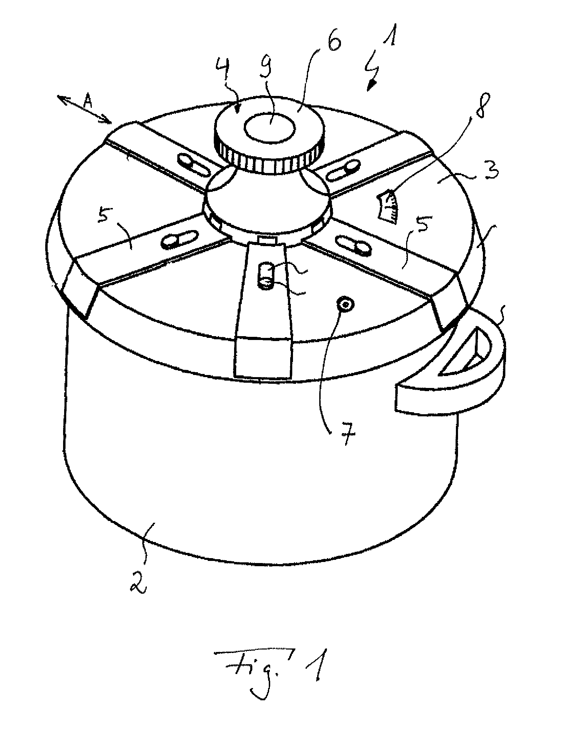

Die einzige Figur 1 zeigt ein erfindungsgemäßes Kochgefäß.

Entsprechend Fig. 1, weist ein erfindungsgemäßes Kochgefäß 1 einen Gefäßkörper 2 sowie einen darauf anordenbaren Deckel 3 auf. Im Unterschied zu herkömmlichen Kochgefäßen, ist bei dem erfindungsgemäßen Kochgefäß 1 jedoch vorzugsweise ein nicht näher gezeigtes Dichtelement vorgesehen, welches beispielsweise lösbar fest am Deckel 3 angeordnet werden kann. Die Option, das Dichtelement lösbar fest am Deckel 3 des Kochgefäßes 1 anzuordnen, ermöglicht eine besonders gute und dadurch hygienische Reinigung des Deckels 3, insbesondere auch in einer Spülmaschine, in welcher üblicherweise das Dichtelement nicht gereinigt werden sollte. Denkbar ist aber ausdrücklich auch, dass das erfindungsgemäße Kochgefäß 1 ohne zusätzliches Dichtelement auskommt. Durch das Dichtelement und unter Zuhilfenahme einer Verriegelungseinrichtung 4, ist der Deckel 3 bis zu einem maximalen Dampfdruck von p < 0,5 bar druckdicht mit dem Gefäßkörper 2 verschließbar. Die Verriegelungseinrichtung 4 umfasst dabei gemäß der Darstellung in Fig. 1 insgesamt sechs in Radialrichtung A des Deckels 3 verstellbare Riegelelemente 5, welche mit einer bekannten und in einem Knauf 6 der Verriegelungseinrichtung 4 integrierten Kulissensteuerung verstellbar sind. Selbstverständlich ist dabei die gezeigte Verriegelungseinrichtung 4 lediglich rein exemplarisch zu verstehen, so dass diese auch in anderer Ausführungsform realisiert werden kann, beispielsweise über randseitig des Deckels 3 angeordnete Klapphebel, welche einen Hinterschnitt an einem Öffnungsrand des Gefäßkörpers 2 hintergreifen.

Der Erfindungsgedanke liegt bei dem dargestellten Kochgefäß 1 darin, dass der Gefäßkörper 2 bis zu einem maximalen Druck von p < 0,5 bar druckdicht mit dem Deckel 3 verschließbar ist. Durch die Begrenzung des maximal zulässigen Drucks p, insbesondere des maximal zulässigen Dampfdrucks, unterliegt das erfindungsgemäße Kochgefäß 1 nicht der Druckbehälterrichtlinie und damit nicht den darin vorgeschriebenen Reglementierungen. Gleichzeitig erlaubt das erfindungsgemäße Kochgefäß 1 ein im Vergleich zu einem nicht druckdicht verschließbaren Kochtopf deutlich schnelleres Garen von in dem Kochgefäß 1 angeordneten Nahrungsmittel. Um dabei sicher ausschließen zu können, dass sich in dem Kochgefäß 1 ein Druck p ≥ 0,5 bar aufbaut, weist das Kochgefäß 1 ein Sicherheitsventil 7 auf, welches ab einem Druck von p ≥ 0,5 bar öffnet, so dass sich zu keinem Zeitpunkt und unter keiner Situation ein Druck von p ≥ 0,5 bar im Kochgefäß 1 aufbauen kann.

Bei der gemäß der Fig. 1 gezeigten Ausführungsform, sind sowohl der Gefäßkörper 2 als auch der Deckel 3 aus Metall, das heißt insbesondere intransparent ausgebildet, wobei jedoch vorgesehen sein kann, dass der Deckel 3 zumindest bereichsweise aus Glas ausgebildet ist. Dabei ist insbesondere an ein bullaugenartiges Sichtfenster gedacht, welches in den ansonsten aus Metall ausgebildeten Deckel 3 integriert sein kann. Selbstverständlich ist auch denkbar, dass der komplette Deckel 3 aus Glas ausgebildet ist. Beiden Ausführungsformen, das heißt sowohl derjenigen, bei welcher der gesamte Deckel 3 aus Glas ausgebildet ist, als auch bei derjenigen, bei der lediglich ein Sichtfenster in den Deckel 3 integriert ist, ist dabei gemein, dass eine Sicht auf das im Gefäßkörper 2 untergebrachte Gargut möglich ist.

Da das erfindungsgemäße Kochgefäß 1 bei der Zubereitung von Nahrungsmittel unter einem Innendruck steht, weist es eine nicht näher bezeichnete Restdrucksicherungseinrichtung auf, welche ein Abnehmen des Deckels 3 bei einem Druck von p > 0,04 bar zuverlässig verhindert. Hierdurch soll insbesondere ausgeschlossen werden, dass ein unter Druck stehendes Kochgefäß 1 geöffnet werden kann, wodurch Verbrennungsrisiken gegeben sein können.

Bei einer weiteren optionalen Ausführungsform des erfindungsgemäßen Kochgefäßes 1 kann an diesem und insbesondere an dem Deckel 3 desselben eine Temperaturmesseinrichtung 8 vorgesehen sein, welche eine von außen sichtbare Temperaturanzeige aufweist. Diese kann beispielsweise analog, digital oder unter Verwendung bildlicher Symbole arbeiten. Eine derartige Temperaturmesseinrichtung 8 ermöglicht dabei eine Überwachung der im Kochgefäß 1 herrschenden Gartemperatur, wodurch insbesondere ein besonders schonendes Garen möglich ist. Denkbar ist hierbei auch, dass die Temperaturmesseinrichtung 8 zur drahtlosen Übermittlung der ermittelten Temperatur an eine weitere Einrichtung, beispielsweise an einen Herd, ausgebildet ist, so dass die im Kochgefäß 1 herrschende Temperatur am Herd abgelesen werden kann. Darüber hinaus kann am Herd eine Steuerung/Regelungseinrichtung angeordnet sein, die eine Heizleistung des Herdes in Abhängigkeit der von der Temperaturmesseinrichtung 8 übermittelten Temperatur steuert bzw. regelt.

Selbstverständlich kann in dem Kochgefäß 1 in üblicher Weise wenigstens ein dampfdurchlässiger und herausnehmbarer Dampfgareinsatz vorgesehen sein, welcher ein Garen von Nahrungsmittel oberhalb des eigentlichen Wasserspiegels ermöglicht. Darüber hinaus kann das Kochgefäß 1 und insbesondere der Deckel 3 desselben, auch eine Ankochautomatik aufweisen, welche ein Entweichen von in dem Kochgefäß 1 befindlicher Luft während einer Ankochphase ermöglicht. Ebenso ist denkbar, dass das erfindungsgemäße Kochgefäß 1 eine Druckanzeige 9 aufweist, welche dem Benutzer beispielsweise anhand farbiger Markierungen signalisiert, wie hoch der im Kochgefäß 1 befindliche Druck, insbesondere der Dampfdruck, ist. Für ein schnelles Öffnen des Kochgefäßes 1, kann dieses eine nicht näher bezeichnete Abdampfeinrichtung aufweisen, über welche kontrolliert Druck, das heißt Dampf aus dem Kochgefäß 1 abgelassen werden kann und zwar soweit, bis der sich noch im Kochgefäß 1 befindliche Druck p < 0,04 bar beträgt.

Mit dem erfindungsgemäßen Kochgefäß 1 lassen sich somit insbesondere eine schnellere Garzeit sowie ein schonendes Garen unter Sauerstoffausschluss realisieren, was insbesondere bei vitaminreicher Kost dazu beiträgt, die Qualität der Lebensmittel zu erhalten. Zugleich lässt sich aufgrund der Tatsache, dass das erfindungsgemäße Kochgefäß 1 nicht unter die Druckbehälterrichtlinie fällt, eine kostengünstige Alternative zu einem Dampfkochtopf bekannter Herstellungsweise aufzeigen.

## Patentansprüche

1. Kochgefäß (1) mit einem Gefäßkörper (2) und einem Deckel (3), **dadurch gekennzeichnet, dass** der Deckel (3) mittels einer Verriegelungseinrichtung (4) bis zu einem maximalen (Dampf-)druck von p < 0,5 bar druckdicht mit dem Gefäßkörper (2) verschließbar ist.

2. Kochgefäß nach Anspruch 1,
**dadurch gekennzeichnet,**
**dass** das Kochgefäß (1) zusätzlich ein Dichtelement aufweist.

3. Kochgefäß nach Anspruch 1 oder 2,
**dadurch gekennzeichnet,**
- **dass** das Kochgefäß (1) ein Sicherheitsventil (7) aufweist, welches ab einem Druck von p ≥ 0,5 bar öffnet und/oder
- **dass** das Kochgefäß (1) eine Restdrucksicherungseinrichtung aufweist, welche ein Abnehmen des Deckels (3) bei einem Druck von p > 0,04 bar verhindert.

4. Kochgefäß nach einem der Ansprüche 1 bis 3,
**dadurch gekennzeichnet,**
**dass** der Deckel (3) zumindest bereichsweise aus transparentem Material, bevorzugt Kunststoff, besonders bevorzugt Glas ausgebildet ist, insbesondere ein Sichtfenster aus Glas aufweist.

5. Kochgefäß nach einem der Ansprüche 1 bis 4,
**dadurch gekennzeichnet,**
- **dass** am Kochgefäß (1) und insbesondere am Deckel (3), eine Temperaturmesseinrichtung (8) vorgesehen ist, die insbesondere eine von außen sichtbare Temperaturanzeige (analog, digital oder bildlich (z.B. mit LEDs)) aufweist, und/oder
- **dass** die Temperaturmesseinrichtung (8) eine Temperaturinformation drahtlos an einen Empfänger, insbesondere an einen Herd, übermittelt.

6. Kochgefäß nach einem der Ansprüche 2 bis 5,
**dadurch gekennzeichnet,**
**dass** das Dichtelement, insbesondere ein Dichtring, lösbar fest am Deckel (3) des Kochgefäßes (1) angeordnet ist.

7. Kochgefäß nach einem der Ansprüche 1 bis 6,
**dadurch gekennzeichnet,**
**dass** das Kochgefäß (1) wenigstens einen dampfdurchlässigen und herausnehmbaren Dampfgareinsatz aufweist.

8. Kochgefäß nach einem der Ansprüche 1 bis 7,
**dadurch gekennzeichnet,**
**dass** das Kochgefäß (1), insbesondere der Deckel (3), eine Ankochautomatik aufweist, die ein Entweichen von in dem Kochgefäß (1) befindlicher Luft während einer Ankochphase ermöglicht.

9. Kochgefäß nach einem der Ansprüche 1 bis 8,
**dadurch gekennzeichnet,**
**dass** am Kochgefäß (1), insbesondere am Deckel desselben, eine Abdampfeinrichtung vorgesehen ist, über welche kontrolliert ein Überdruck aus dem Kochgefäß (1) abgelassen werden kann.

10. Kochgefäß nach einem der Ansprüche 1 bis 9,
**dadurch gekennzeichnet,**
**dass** die Verriegelungseinrichtung (4) einen Drehknauf (6), eine Schnalle, ein Riegelelement (5) oder einen Klappgriff umfasst.
